(19) Europäisches Patentamt

European Patent Office

Office européen des brevets

(11) **EP 0 551 010 B1**

## (12) EUROPEAN PATENT SPECIFICATION

(45) Date of publication and mention
of the grant of the patent:
**05.03.1997 Bulletin 1997/10**

(51) Int Cl.6: **G01N 15/14**

(21) Application number: **92311869.9**

(22) Date of filing: **30.12.1992**

(54) **Apparatus for analyzing particle images**

Gerät zur Teilchenbildanalyse

Appareil pour l'analyse d'images de particles

(84) Designated Contracting States:
**DE FR GB IT**

(30) Priority: **30.12.1991 JP 359622/91**

(43) Date of publication of application:
**14.07.1993 Bulletin 1993/28**

(73) Proprietor: **TOA MEDICAL ELECTRONICS CO., LTD.**
**Chuoku, Kobe (JP)**

(72) Inventors:
• **Ogino, Shinichi**
**Nishiku, Kobe (JP)**

• **Kosaka, Tokihiro**
**Kakogawashi, Hyogoken (JP)**

(74) Representative: **Price, Paul Anthony King**
**D. Young & Co.,**
**21 New Fetter Lane**
**London EC4A 1DA (GB)**

(56) References cited:
**EP-A- 0 466 168**      **EP-A- 0 501 005**
**EP-A- 0 501 007**      **DE-A- 3 705 876**

## Description

The present invention relates to analyzing particle images by passing a sample liquid containing blood corpuscles, cells, microorganisms or other particles, detecting the target particles, and taking images thereof.

The following methods have been hitherto known for analyzing particles in the field of blood analysis or the field of microorganism measurement.

(1) As the method of measuring leukocytes in the field of blood analysis, the method of measuring the fluorescence emitted from dyed cells by using a flow cytometer.

(2) In the field of blood analysis, the method of placing a specimen smeared on a slide glass beneath a microscope, moving the stage automatically in the X-, Y-directions, and taking fluorescent images and white light images by a video camera or the like.

(3) In the field of microorganism measurement, the measurement is done by culture inspection requiring various culture media, which took many days until the end of test. In such background, various methods have been developed, including the ATP measurement method (see Millon, O., Milsson, L. et al., J. Clin. Microbiol., 18, 521, 1983), impedance method (see Brown, D., Warner, M., Taylor, C. et al., J. Clin. Pathol., 37, 65-69, 1984), enzyme and fluorescence detecting method (see Japanese Laid-Open Patent Sho. 58-116700), and DEFT method combining membrane filter method and fluorescence microscopic method (see G.L. Pattipher, et al., J. Appl. Bacteriol. 53, 323, 1982).

More recently, a "quick measuring apparatus of microorganism" is disclosed in Japanese Laid-Open Patent Hei. 3-29837, in which the membrane filter and fluorescence microscope are combined, the sample captured by a filter is dyed with fluorescence, the sample is put on the microscope of which sample stage automatically moves in the X-, Y-directions, and the cells emitting fluorescence are measured.

However, in method (1), the measured cells can not be recognized visually.

In method (2), the number of cells that can be measured at a time is limited, and the pretreatment of dyeing and smearing is complicated.

In method (3), it takes a long time, the precision is not sufficient, and the pretreatment is complicated.

DE-A-3 705 876 discloses a flow cytometer in which an image of a cell is produced using a pulse laser source and a CCD camera between which the cells pass. The triggering signal for the pulse source is provided by an optical cell sensor located upstream of the pulse source.

According to the present invention, there is provided a method of analyzing particle images, comprising:

passing a sample liquid containing particles through a flow cell;

irradiating a particle sensing region of the flow cell with fluorescence excitation light of a wavelength for producing fluorescence in target particles;

using a detector to detect any fluorescence and thereby judging whether a target particle has been detected; and

if it is judged that a target particle has been detected, irradiating an image pickup region of the flow cell with imaging light to produce an image of the target particle which is picked up by image pickup means and closing the optical path to the detector to prevent the detector from receiving the imaging light.

With embodiments of the invention, it is possible to produce white light or fluorescent images of target particles. Even if there is only a small number of particles, such as leukocytes in blood or microorganisms in beer or some other beverage, the images may be produced efficiently without overlooking particles. It is also possible to selectively take and analyze the images of target particles when a small number of target particles emitting fluorescence are mixed in which a large number of non-target particles.

Preferably, the sample liquid is in a sheath flow. A sheath flow typically refers to a flow of a suspension of particles of which the circumference is covered with a laminar sheath liquid in order to align the particles in a line and pass them along the middle of the liquid flow.

In embodiments of the invention, a short particle sensing region is formed in the sample flow region so as to cross the flow of particles in the image pickup region of the image pickup means. The fluorescence excitation light from a first light source continuously irradiates the sample flow. When a target particle emitting fluorescence passes through the particle sensing region, its fluorescence is detected by a photo detector, and a pulse of light is emitted from a second light source to produce a particle image. The particle sensing region is given a short and wide form by a slit and crosses across the inside of the image pickup region. When the second light source emits light, the subject particle previously detected is still present in the image pickup region, so that an image of the target particle may be taken. If the particle is a non-target particle that does not emit fluorescence when passing through the sensing region, the second light source does not emit light, and image pickup is not effected.

At the time of particle image pickup, since a large quantity of light is emitted from the second light source, the optical path to the detector is closed (e.g. by a shutter disposed in front of the detector) at the time of image pickup in order to protect the detector by ensuring that the light does not reach the detector.

Non-limiting embodiments of the invention will now be described with reference to the accompanying drawings, in which:-

Fig. 1 is a schematic diagram of an embodiment of apparatus for analyzing particles images in accordance with the invention;

Fig. 2 is a characteristic diagram of a dichroic mirror of Fig. 1;

Fig. 3 is an explanatory diagram showing the relationship between am image pickup area and a slit of a flow cell shown in Fig. 1;

Fig. 4 is a schematic diagram of a second embodiment of apparatus in accordance with the invention;

Fig. 5 is a schematic diagram of a third embodiment of apparatus in accordance with the invention; and

Fig. 6 is a schematic diagram of a fourth embodiment of apparatus in accordance with the invention.

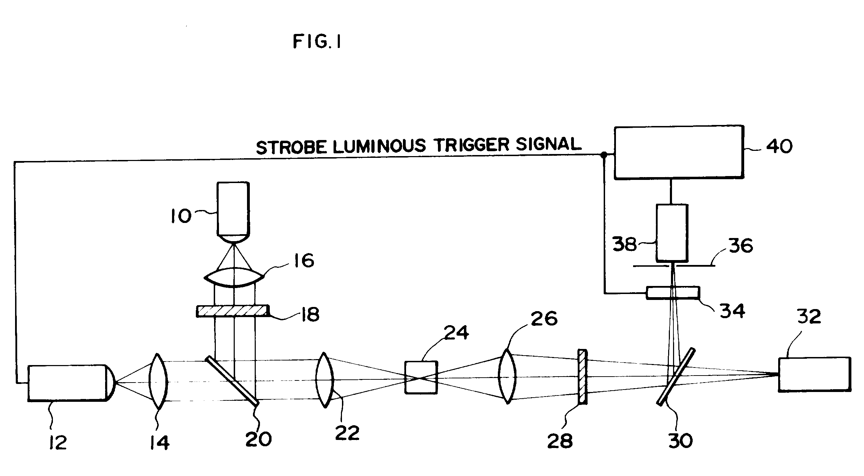

Fig. 1 shows an embodiment of the invention. There are two light sources: a first light source 10 for detecting cells (for example, a xenon lamp) and a second light source 12 for white light image pickup (for example, a strobe light source such as pulse emission type xenon lamp). The first light source 10 emits light continuously.

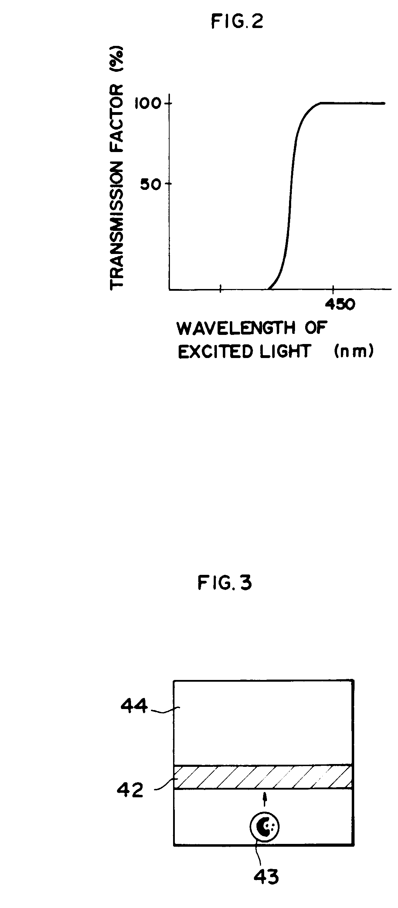

Collimator lenses 14, 16 regulate the light emitted from the light sources 10, 12 so as to form parallel light beams. An excitation light selection filter 18 reacts or adjusts the wavelength of the light used to detect the cells so that the wavelength is the most appropriate for the target cells and fluorescent dye solution. The selected wavelength must be changed depending on the target (for example, when the sample dye agent is fluorescein-diacetate, a filter passing (transmitting) 490 nm is used). The dichroic mirror 20 is intended to direct the light of the detection light source 10 and the white light image pickup light source 12 toward the flow cell 24. The light of the wavelength of the detection light source 10 is reflected, and the light of the white light image pickup light source 12 is passed (transmitted) (see Fig. 2).

A sample flow containing cells is led into a flow cell 24 composed of a transparent body such as glass or plastic, and a sheath liquid is supplied so as to cover the circumference of the sample flow, thereby forming a sheath flow.

The detection light and white light are focused by a condensing lens 22, and are directed at the cells flowing in the flow cell 24. The fluorescence or transmitted light emitted from the target cells is focused by an objective lens 26 of a microscope. Of the light focused by the objective lens 26, the light having the excitation wavelength is removed by an excitation light blocking filter 28, and the fluorescence wavelength and the wavelengths used for picking up the white light image are fed into a subsequent photo detection unit.

A part of the light passing (transmitted) through the filter 28 is reflected by the half mirror 30, and is fed into a photo detector 38 (for example, a photo-multiplier tube) for detecting fluorescence.

An electronic shutter 34 placed before the photo detector 38 is intended to cut off the optical path leading to the photo detector 38 when the strobe light source emits light because the detector element is broken if strobe light enters the photo detector 38 during white light image pickup. Instead of the electronic shutter 34, a photo detector incorporating a gate circuit (for example, C1392 of Hamamatsu Photonics) may be used to substitute for the function of the electronic shutter.

The slit 36 before the photo detector 38 is intended, as shown in Fig. 3, to limit the fluorescence detecting region in the flow cell to the narrow sensing region 42 indicated by shaded area, and its size (that is, the width in the horizontal direction in Fig. 3) should preferably coincide with the width of the image pickup region (viewing field) 44 of the image pickup means (video camera) 32, while the length (in the vertical direction in Fig. 3) should preferably correspond to about 20 $\mu$m in the flow cell. Numeral 43 is a cell. Accordingly, for example, when using a lens of magnifying power 10 as the objective lens 26, the size should be 0.2x1.5mm or, in the case of a lens of magnifying power 40, 0.8x6mm. In general, the cell image may be missed, though a particle is detected, when the particle detecting region is greater than the width of the viewing field region of the video camera.

The particle detection judging circuit 40 is a strobe control circuit and incorporates a cell detection judging circuit and a strobe trigger circuit. In the cell detection judging circuit, based on the fluorescent signal produced from the photo detector 38, it is judged whether the passing cell is a target cell or not. When judged to be a target cell, a strobe emission (luminous) trigger signal is issued immediately by the strobe trigger circuit (for example, within 100 $\mu$s in the case of sheath flow velocity of 1 m/s), and the second light source (strobe light source) 12 emits strobe light, and the cell image is taken by the image pickup means (video camera) 32.

The operation (function) is as follows. The cell detection light has its wavelength selected by the excitation light selection filter 18, and always irradiates the sample in the flow cell 24 via the dichroic mirror 20 and condensing lens 22. When the target cell is not present, the excitation light passing through the sensing region 42 in the flow cell corresponding to the slit region before the photo detector 38 is cut off by the excitation light blocking filter 28 behind the objective lens 26, and does not enter the photo detector 38.

On the other hand, when the target cell passes, the fluorescence emitted from the cell is focused by the objective lens 26, and passes through the excitation light blocking filter 28, and is reflected by the half mirror 30 to enter the photo detector 38. The signal from the photo detector 38 is processed in the particle detection judging circuit 40. In this circuit, a target cell is judged to be present when the input signal intensity is more than a certain value, or the pulse width is more than a certain value, or when both are satisfied, and a trigger signal for the second light source 12 is issued, thereby activating the second light source 12.

The strobe light passes through the dichroic mirror 20 and condensing lens 22, and irradiates the cell in the flow cell 24. The light transmitted through the cell passes through the objective lens 26 and filter 28, and is focused on the image pickup means 32 after passing through the half mirror 30, so that the cell image is obtained. What should be noted here is that a part of the light passing through the objective lens 26 at the time of strobe emission is reflected by the half mirror 30 and is directed toward the photo detector 38. If this light enters the photo detector 38, it destroys the element because the light intensity is high. To avoid this, an electronic shutter 34 is placed before the photo detector 38 and by closing the shutter during the strobe emission period, the light is prevented from entering the photo detector 38. Instead of the electronic shutter 34, a photo-multiplier tube with gate function may be used. Also, in order that the cell image is not blurred when taking the still image of the cell, the cell movement during the strobe emission period must be less than 1 μm. For example, if the mission time of the strobe light is 1 μs, the flow velocity of sheath flow must be about 1000 mm/s.

Supposing, for example, the diameter of the sample flow in the sheath flow to be 10 μm, only 0.08 μl/s of sample can be analyzed per unit time. Therefore, by forming the sample as a flat flow, when the sample is allowed to occupy the entire viewing field width (for example, 150 μm) of the image pickup means (video camera), the sample amount analyzed per unit time may be increased to 1.18 μl/s. The present applicant has already filed patent applications relating to forming a flat sample flow (Japanese Patent Applications Hei. 3-210053, Hei. 3-210054).

When a leukocyte cell is the target, for example, by diluting a sample of 5000 leukocytes/μl by 10 times, a measurement sample contains 500 leukocytes/μl. When the sample flow diameter is 10 μm, the sample volume passing the image pickup area in the period of an even-number field (for example, 1/60 sec) is $\pi$ x (5 x $10^{-3})^2$ x 16.7 = 1.3 x $10^{-3}$ μl. Hence, the mean number of cells passing through the image pickup area in the period of an even-number field is 500 x 1.3 x $10^{-3}$ = 0.65 cell/field.

Generally, the distribution of particles flowing in a sheath flow conforms to the Poisson probability distribution, and the probability of imaging a cell in an arbitrary even-number field period is expressed in the following formula by using the mean interval of particles, which coincides very well with experimental data. In the equation, t is the particle interval.

$$f\beta(t) = \beta e^{-\beta t}$$

More specifically, when the mean of cells passing through the image pickup area is 0.65/field, the probability of imaging a cell is 48.0% and, supposing the measurement time to be 45 seconds, 648 cell images are obtained.

Supposing the sample flow to be 150 μm x 10 μm, similarly the probability of imaging a cell is about 100%, and about 1350 cell images are obtained.

When measuring microorganisms, since the number of cells is as small as 100 cells/ml, the sample cannot be measured directly but, by concentrating the sample about 5000 times by processing the sample in a centrifugal machine or capturing on a membrane filter and diluting, similar results as for leukocyte samples will be obtained.

Next is explained the reason for limiting the fluorescence detecting region with the slit 36.

The problem of how many particles flowing in a sheath flow are present in a specific region (for example, the region corresponding to the slit) is answered by the Poisson probability distribution. When the particle concentration is low, the probability of the presence of two or more particles is low, but as the concentration becomes higher it increases. Also, this probability becomes higher as the area of the region becomes wider. When two or more particles are present in the region (this is called simultaneous passing), the fluorescence simultaneously emitted from the particles enters the photo detector, and the sum of the fluorescence emitted from the particles is detected as the signal intensity, and it is possible that something other than a target cell may be judged to be a target cell. Also, when two or more particles emitting fluorescence pass through in quick succession, the individual signals combine to form a wider signal which may be mistaken for the signal of a target cell.

Considered from this viewpoint, the shorter side of a rectangular slit should be as short as possible. However, the shorter the length, the less of the fluorescence emitted from the particles enters the photo detector 38 and this means that cell detection is difficult. Hence, the contradictory requirements must be both satisfied. For example, when the concentration of the particles emitting fluorescence is 5000 cells/μl and the region corresponding to the slit in the flow cell is 20μm x 150μm, the probability of the presence of two or more particles in the slit region is about 1% as estimated from the Poisson probability distribution, and at a lower concentration the possibiity of simultaneous passing is almost nil. When the region corresponding to the slit is 50μm x 150μm, the probability of two or more particles passing simultaneously is about 5%. It is known that passing in quick succession hardly occurs when using a slit of 20μm x 150μm.

Hence, by limiting the size of the slit to around 20μm x 150μm, the fluorescence entering the photo detector may be considered to be obtained from one particle, so that all target particles passing through the detection region will be detected.

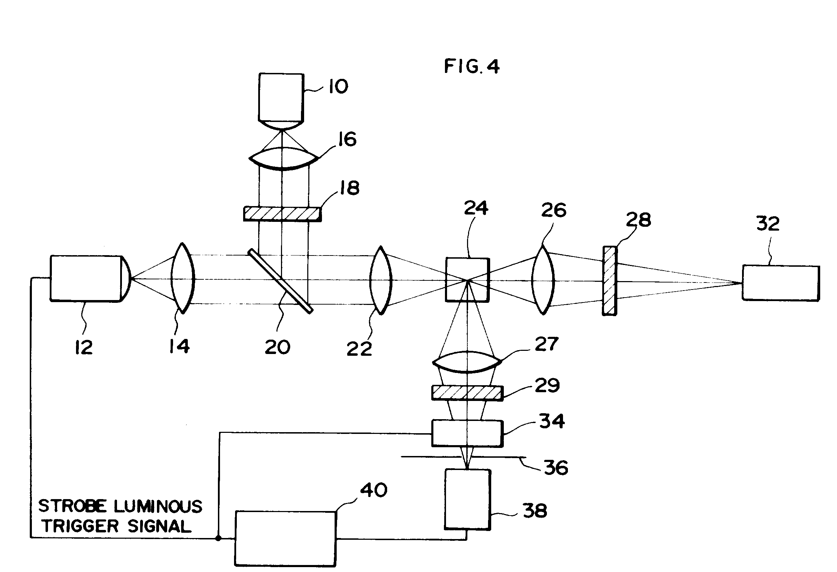

Fig. 4 shows a second embodiment of the invention. With the first embodiment shown in Fig. 1, the quantity of light entering the cell detector and video camera is lowered because the light receiving system for cell detection and the light receiving system for image pickup are disposed on the same optical axis and thus the half mirror 30 must be included in the system. To overcome this problem, the second embodiment has the optical system for cell detection (the system comprising the objective lens 27, optical filter or excitation light blocking filter 29, shutter 34, slit 36 and photo detector 38) optically isolated from the image pickup system. Thus, the half mirror 30 of Fig. 1 is not needed.

In this embodiment, compared with the first embodiment in Fig. 1, a pin hole having a round opening (for example, 150μm in diameter) may be used as the slit 36.

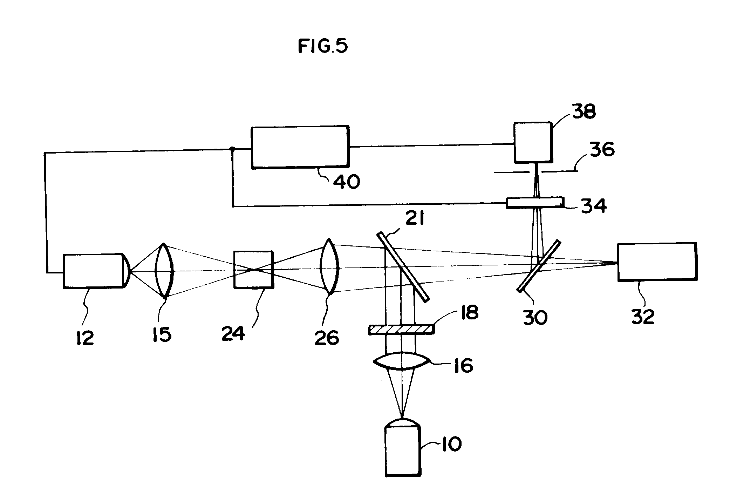

Fig. 5 shows a third embodiment of the invention. In this embodiment, the system for irradiating cell detection light is disposed on the light receiving side to form the so-called spotlight type system. In this case, the excitation light blocking filter 28 of the first embodiment of Fig. 1 is not needed, and the construction is simplified.

In the embodiment shown in Fig. 5, the light from the detection light source 10 passes through the flow cell 24, and the quantity reflected back to the image pickup means 32 is small. If the dichroic mirror 21 has the characteristic shown in Fig. 2, any light from the first light source (detection light source) 10 that is reflected by the flow cell 24 or a cell in the sheath flow is reflected by the dichroic mirror 21, and therefore does not enter the image pickup means (video camera) 32. That is, the mirror 21 acts as the excitation light blocking filter, and therefore it is not necessary to place a blocking filter on the side of the image pickup means.

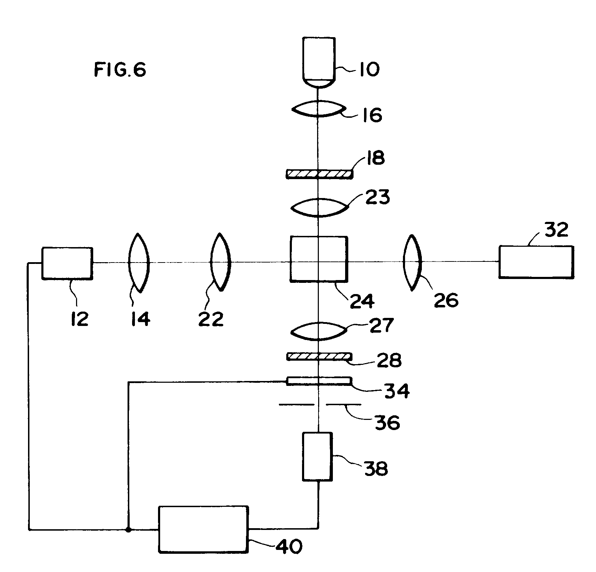

Fig. 6 shows a fourth embodiment of the invention. This embodiment is arranged so that the excitation light emitted from the detection light source 10 does not enter the image pickup means (video camera) 32. The irradiation system and light receiving system for particle detection are both separated from the irradiation system and imaging system for taking particle images. Thus, the dichroic and half mirrors are not necessary. Hence, it has the following effects:

(1) It is not necessary to use an optical filter (excitation light blocking filter) 28 in the white light image pickup system.
(2) Even if the wavelength of the excitation light is in the wavelength range of the white light source 12, it has no effect on the white light image. As a result, the degree of freedom of selection of the wavelength of the excitation light is enhanced.
(3) Cell detection is from the side of the flat sample flow and hence, compared with the embodiment of Fig. 1, the slit 36 does not have to be a rectangular slit. Instead, a pin hole of about 150μm in diameter may be used.

The embodiments of the invention have the following characteristics:

(1) A simple structure is used to detect a target particle mixed in with other types of particles and then to image the target particle. In particular, in a sample having a low concentration of target particles or when a small number of fluorescence emitting particles (target particles) are present in a great number of particles, the images of the target particles may be selectively taken.
(2) By employing the technique of flow imaging, a high processing capacity is obtained, which was impossible with the conventional microscopic measurement.
(3) In the spotlight type system for producing fluorescent images, the positioning of the dichroic mirror enables the excitation light to uniformly irradiate all of the cells. The excitation light intensity is about twice the intensity obtained when the irradiation is from one side.
(4) The target particles can be counted by the signal processing of the particle detection monitoring system.
(5) By replacing the optical filter, the wavelength of the excitation light may be set to a desired value, so that wide and general applications may be realized.

Having described preferred embodiments of the invention with reference to the accompanying drawings, it is to be understood that the invention is not limited to those precise embodiments, and that various changes and modifications may be made by one skilled in the art without departing from the invention as defined by the appended claims.

**Claims**

1. Apparatus for analyzing particle images, comprising:

a flow cell (24) for a sheath flow of a sample liquid containing particles;
a first light source (10);
a first optical filter (18) for obtaining fluorescence excitation light of a specific wavelength from the light emitted from the first light source (10);
a photo detector (38) for detecting fluorescence emitted from a particle (43) irradiated with the fluorescence excitation light;
a second light source (12) for emitting a pulse of light for producing an image of the particle (43);
image pickup means (32) for picking up the image of the particle (43) produced by the second light source (12);
particle detection judging means (40) for processing a fluorescent signal from the photo detector (38) to judge whether a target particle has been detected, and for issuing a trigger signal for activating the second light source (12) when it is judged that a target particle has been detected;

a dichroic mirror (20) disposed so as to combine the optical paths of the light from the first and second light sources (10, 12) to irradiate a region of the flow cell (24);

a second optical filter (28) for blocking off the fluorescence excitation light that has been transmitted through the flow cell (24);

a half mirror (30) for dividing the light transmitted by the second optical filter (28) into first and second parts, and for directing the first part towards the photo detector (38) and the second part towards the image pickup means (32);

a shutter (34) disposed between the half mirror (30) and the photo detector (38), for transmitting or blocking off light, the shutter being arranged to be closed while the second light source (12) is emitting light; and

a slit (36) disposed between the shutter (34) and the photo detector (38) so as to form a sensing region (42) across the flow of particles in an image pickup region (44) of the image pickup means (32) in the flow cell (24).

2. Apparatus for analyzing particle images, comprising:

a flow cell (24) for a sheath flow of a sample liquid containing particles;

a first light source (10);

a first optical filter (18) for obtaining fluorescence excitation light of a specific wavelength from the light emitted from the first light source (10);

a photo detector (38) for detecting fluorescence emitted from a particle in a direction different to the direction of transmission of the fluorescence excitation light through the flow cell (24);

a second light source (12) for emitting a pulse of light for producing an image of the particle (43);

image pickup means (32) for picking up the image of the particle (43) produced by the second light source (12);

particle detection judging means (40) for processing a fluorescent signal from the photo detector (38) to judge whether a target particle has been detected, and for issuing a trigger signal for activating the second light source (12) when it is judged that a target particle has been detected;

a dichroic mirror (20) disposed so as to combine the optical paths of the light from the first and second light sources (10, 12) to irradiate a region of the flow cell (24);

a second optical filter (28) disposed between the flow cell (24) and the image pickup means (32) for blocking off the fluorescence excitation light that has been transmitted through the flow cell (24);

a third optical filter (29) disposed between the flow cell (24) and the photo detector (38) for blocking off the fluorescence excitation light;

a shutter (34) disposed between the third optical filter (29) and the photo detector (38), for transmitting or blocking off light, the shutter being arranged to be closed while the second light source (12) is emitting light; and

a slit (36) disposed between the shutter (34) and the photo detector (38) so as to form a sensing region (42) across the flow of particles in an image pickup region (44) of the image pickup means (32) in the flow cell (24).

3. Apparatus for analyzing particle images, comprising:

a flow cell (24) for a sheath flow of a sample liquid containing particles;

a first light source (10);

an optical filter (18) for obtaining fluorescence excitation light of a specific wavelength from the light emitted from the first light source (10);

a photo detector (38) for detecting fluorescence emitted from a particle (43) irradiated with the fluorescence excitation light;

a second light source (12) for emitting a pulse of light for producing an image of the particle (43);

image pickup means (32) for picking up the image of the particle (43) produced by the second light source (12);

particle detection judging means (40) for processing a fluorescent signal from the photo detector (38) to judge whether a target particle has been detected, and for issuing a trigger signal for activating the second light source (12) when it is judged that a target particle has been detected;

a dichroic mirror (21) disposed so as to receive from the flow cell (24) light produced by the second light source (12) that has been transmitted through the flow cell and to direct towards the flow cell the fluorescent excitation light;

a half mirror (30) for dividing into first and second parts the light received from the flow cell (24) via the dichroic mirror (21), and for directing the first part towards the photo detector (38) and the second part towards the image pickup means (32);

a shutter (34) disposed between the half mirror (30) and the photo detector (38), for transmitting or blocking off light, the shutter being arranged to be closed while the second light source (12) is emitting light; and
a slit (36) disposed between the shutter (34) and the photo detector (38), so as to form a sensing region (42) across the flow of particles in an image pickup region (44) of the image pickup means (32) in the flow cell (24).

4. Apparatus for analyzing particle images, comprising:

a flow cell (24) for a sheath flow of a sample liquid containing particles;
a first light source (10);
a first optical filter (18) for obtaining fluorescence excitation light of a specific wavelength from the light emitted from the first light source (10);
a photo detector (38) for detecting fluorescence emitted from a particle (43) irradiated with the fluorescence excitation light;
a second light source (12) for emitting a pulse of light for producing an image of the particle (43);
image pickup means (32) for picking up the image of the particle (43) produced by the second light source (12);
particle detection judging means (40) for processing a fluorescent signal from the photo detector (38) to judge whether a target particle has been detected, and for issuing a trigger signal for activating the second light source (12) when it is judged that a target particle has been detected;
a second optical filter (28) disposed between the flow cell (24) and the photo detector (38) for blocking off the fluorescence excitation light;
a shutter (34) disposed between the optical filter (28) and the photo detector (38), for transmitting or blocking off light, the shutter being arranged to be closed while the second light source (12) is emitting light; and
a slit (36) disposed between the shutter (34) and the photo detector (38) so as to form a sensing region (42) across the flow of particles in an image pickup region (44) of the image pickup means (32) in the flow cell (24);
wherein a first optical axis running from the first light source (10) to the photo detector (38) is separate from a second optical axis running from the second light source (12) to the image pickup means (32), and the first and second optical axes cross each other in the flow cell (24).

5. Apparatus according to claim 1, 2, 3 or 4, wherein the shutter (34) is omitted and, instead, the photo detector has a gate function, with the gate being arranged to be closed while the second light source (12) is emitting light.

6. Apparatus according to claim 1, 2, 3, 4 or 5, wherein the first light source (10) is arranged to emit light continuously, the second light source (12) is arranged to emit a pulse of white light and the image pickup means (32) is arranged to pick up a still image of the particle (43).

7. A method of analyzing particle images, comprising:

passing a sample liquid containing particles through a flow cell (24);
irradiating a particle sensing region (42) of the flow cell with fluorescence excitation light of a wavelength for producing fluorescence in target particles;
using a detector (38) to detect any fluorescence and thereby judging whether a target particle (43) has been detected; and
if it is judged that a target particle (43) has been detected, irradiating an image pickup region (44) of the flow cell (24) with imaging light to produce an image of the target particle (43) which is picked up by image pickup means (32) and closing the optical path to the detector (38) to prevent the detector from receiving the imaging light.

8. A method according to claim 7, wherein the particle sensing region (42) is located in the image pickup region (44) and is shorter, in the flow direction of the particles, than the image pickup region (44).

9. A method according to claim 8, wherein the lateral edges of the particle sensing region (42) are substantially coincident with the lateral edges of the image pickup region (44).

10. A method according to claim 7, 8 or 9, wherein the particle sensing region (42) is continuously irradiated with the fluoresence excitation light, and the sample liquid passes through the flow cell (24) as a sheath flow.

**Patentansprüche**

1. Vorrichtung zum Analysieren von Teilchenbildern mit:

einer Strömungszelle (24) für einen Hüllenfluß einer Teilchen enthaltenden Probenflüssigkeit,
einer ersten Lichtquelle (10),
einem ersten optischen Filter (18) zum Erhalten von Fluoreszenzerregungslicht einer speziellen Wellenlänge von dem von der ersten Lichtquelle (10) ausgesandten Licht,

einem Photodetektor (38) zur Feststellung von Fluoreszenz, die von einem mit dem Fluoreszenzerregungslicht bestrahlten Teilchen (43) ausgesandt wird,

einer zweiten Lichtquelle (12) zum Emittieren eines Lichtimpulses zur Erzeugung eines Bildes des Teilchens (43),

einer Bildaufnahmeeinrichtung (32) zur Aufnahme des durch die zweite Lichtquelle (12) erzeugten Bildes des Teilchens (43),

einer Beurteilungseinrichtung (40) für die Teilchenermittlung zur Verarbeitung eines fluoreszierenden Signales von dem Photodetektor (38), um zu beurteilen, ob ein Zielteilchen ermittelt wurde, und zur Abgabe eines Auslösesignals zur Aktivierung der zweiten Lichtquelle (12), wenn beurteilt wird, daß ein Zielteilchen ermittelt wurde,

einem dichroitischen Spiegel (20), der so angeordnet ist, daß er die optischen Wege des Lichtes und der ersten und der zweiten Lichtquelle (10, 12) vereinigt, um einen Bereich der Strömungszelle (24) zu bestrahlen,

einem zweiten optischen Filter (28) zum Blokken des Fluoreszenzerregungslichtes, das durch die Strömungszelle (24) übertragen wurde,

einem Halbspiegel (30) zur Teilung des durch das zweite optische Filter (28) übertragenen Lichtes in einen ersten und einen zweiten Teil und zur Lenkung des ersten Teils zu dem Photodetektor (38) und des zweiten Teils zu der Bildaufnahmeeinrichtung (32),

einem zwischen dem Halbspiegel (30) und dem Photodetektor (38) angeordneten Verschluß (34) zum Übertragen oder Blocken von Licht, wobei der Verschluß so angeordnet ist, daß er verschlossen ist, während die zweite Lichtquelle (12) Licht aussendet, und

einem zwischen dem Verschluß (34) und dem Photodetektor (38) so angeordneten Spalt (36), daß ein Abfühlbereich (42) über den Teilchenfluß in einem Bildaufnahmebereich (44) der Bildaufnahmeeinrichtung (32) in der Strömungszelle (24) gebildet wird.

2. Vorrichtung zum Analysieren von Teilchenbildern mit

einer Strömungszelle (24) für einen Hüllenfluß einer Teilchen enthaltenden Probenflüssigkeit, einer ersten Lichtquelle (10),

einem ersten optischen Filter (18) zum Erhalten von Fluoreszenzerregungslicht einer speziellen Wellenlänge von dem von der ersten Lichtquelle (10) ausgesandten Licht, einem Photodetektor (38) zur Ermittlung von Fluoreszenz, die von einem Teilchen in eine von der Übertragungsrichtung des Fluoreszenzerregungslichtes durch die Strömungszelle (24) verschiedenen Richtung ausgesandt wird,

einer zweiten Lichtquelle (12) zum Emittieren eines Lichtimpulses zur Erzeugung eines Bildes des Teilchens (43),

einer Bildaufnahmeeinrichtung (32) zur Aufnahme des Bildes des durch die zweite Lichtquelle (12) erzeugten Teilchens (43),

einer Beurteilungseinrichtung (40) für die Teilchenermittlung, um ein fluoreszierendes Signal von dem Photodetektor (38) zu verarbeiten, um zu beurteilen, ob ein Zielteilchen ermittelt wurde, und zur Abgabe eines Auslösungssignals zur Aktivierung der zweiten Lichtquelle (12), wenn beurteilt wird, daß ein Zielteilchen ermittelt wurde,

einem dichroitischen Spiegel (20), der so angeordnet ist, daß er die optischen Wege des Lichtes von der ersten und zweiten Lichtquelle (10, 12) vereinigt, um einen Bereich der Strömungszelle (24) zu bestrahlen,

einem zwischen der Strömungszelle (24) und der Bildaufnahmeeinrichtung (32) angeordneten zweiten optischen Filter (28) zum Blocken des Fluoreszenzerregungslichtes, das durch die Strömungszelle (24) übertragen wurde,

einem zwischen der Strömungszelle (24) und dem Photodetektor (38) angeordneten dritten optischen Filter (29) zum Blocken des Fluoreszenzerregungslichtes,

einem zwischen dem dritten optischen Filter (29) und dem Photodetektor (38) angeordneten Verschluß (34) zum Übertragen oder Blocken von Licht, wobei der Verschluß derart angeordnet ist, daß er verschlossen ist, während die zweite Lichtquelle (12) Licht aussendet, und

einem zwischen dem Verschluß (34) und dem Photodetektor (38) derart angeordneten Spalt (36), daß ein Abfühlbereich (42) über den Teilchenfluß in einem Bildaufnahmebereich (44) der Bildaufnahmeeinrichtung (32) in der Strömungszelle (24) gebildet wird.

3. Vorrichtung zum Analysieren von Teilchenbildern mit

einer Strömungszelle (24) für einen Hüllenfluß einer Teilchen enthaltenden Probenflüssigkeit, einer ersten Lichtquelle (10),

einem optischen Filter (18) zum Erhalten von Fluoreszenzerregungslicht einer speziellen Wellenlänge von dem von der ersten Lichtquelle (10) ausgesandten Licht, einem Photodetektor (38) zur Ermittlung von Fluoreszenz, die von einem Teilchen (43) ausgesandt wird, welche mit dem Fluoreszenzerregungslicht bestrahlt wird,

einer zweiten Lichtquelle (12) zum Emittieren eines Lichtimpulses zur Erzeugung eines Bildes des Teilchens (43),

einer Bildaufnahmeeinrichtung (32) zur Aufnahme des von der zweiten Lichtquelle (12) erzeugten Bildes des Teilchens (43),

einer Beurteilungseinrichtung (40) für die Teilchenermittlung zur Verarbeitung eines fluoreszierenden Signals von dem Photodetektor (38), um zu beurteilen, ob ein Zielteilchen ermittelt wurde, und zur Abgabe eines Auslösungssignals zur Aktivierung der zweiten Lichtquelle (12), wenn beurteilt wird, daß ein Zielteilchen ermittelt wurde,

einem dichroitischen Spiegel (21), der so angeordnet ist, daß er von der Strömungszelle (24) Licht empfängt, das von der zweiten Lichtquelle (12) erzeugt wurde und durch die Strömungszelle übertragen wurde, und das Fluoreszenzerregungslicht zu der Strömungszelle lenkt,

einem Halbspiegel (30) zur Teilung des von der Strömungszelle (24) über den dichroitischen Spiegel (21) empfangenen Lichtes in einen ersten und einen zweiten Teil und zur Lenkung des ersten Teils zu dem Photodetektor (38) und des zweiten Teils zu der Bildaufnahmeeinrichtung (32),

einem zwischen dem Halbspiegel (30) und dem Photodetektor (38) angeordneten Verschluß (34) zum Übertragen oder Blocken von Licht, wobei der Verschluß so angeordnet ist, daß er verschlossen ist, während die zweite Lichtquelle (12) Licht aussendet, und

einem zwischen dem Verschluß (34) und dem Photodetektor (38) derart angeordneten Spalt (36), daß ein Abfühlbereich (42) über den Teilchenfluß in einem Bildaufnahmebereich (44) der Bildaufnahmeeinrichtung (32) in der Strömungszelle (24) gebildet wird.

4. Vorrichtung zum Analysieren von Teilchenbildern mit

einer Strömungszelle (24) für einen Hüllenfluß einer Teilchen enthaltenden Probenflüssigkeit, einer ersten Lichtquelle (10),

einem ersten optischen Filter (18) zum Erhalten von Fluoreszenzerregungslicht einer speziellen Wellenlänge von dem von der ersten Lichtquelle (10) ausgesandten Licht,

einem Photodetektor (38) zur Ermittlung von Fluoreszenz, die von einem Teilchen (43) ausgesandt wird, welches mit dem Fluoreszenzerregungslicht bestrahlt wird,

einer zweiten Lichtquelle (12) zum Emittieren eines Lichtimpulses zur Erzeugung eines Bildes des Teilchens (43),

einer Bildaufnahmeeinrichtung (32) zur Aufnahme des von der zweiten Lichtquelle (12) erzeugten Bildes des Teilchens (43),

einer Beurteilungseinrichtung (40) für Teilchenermittlung zur Verarbeitung eines fluoreszierenden Signals von dem Photodetektor (38), um zu beurteilen, ob ein Zielteilchen ermittelt wurde, und zur Abgabe eines Auslösesignals zur Aktivierung der zweiten Lichtquelle (12), wenn beurteilt wird, daß ein Zielteilchen ermittelt wurde,

einem zwischen der Strömungszelle (24) und dem Photodetektor (38) angeordneten zweiten optischen Filter (28) zum Blocken des Fluoreszenzerregungslichtes,

einem zwischen dem optischen Filter (28) und dem Photodetektor (38) angeordneten Verschluß (34) zum Übertragen oder Blocken von Licht, wobei der Verschluß so angeordnet ist, daß er verschlossen ist, während die zweite Lichtquelle (12) Licht aussendet, und

einem zwischen dem Verschluß (34) und dem Photodetektor (38) derart angeordneten Spalt (36), daß ein Abfühlbereich (42) über den Teilchenfluß in einem Bildaufnahmebereich (24) der Bildaufnahmeeinrichtung (32) in der Strömungszelle (24) gebildet wird,

wobei eine erste optische Achse, die von der ersten Lichtquelle (10) zu dem Photodetektor (38) verläuft, von einer zweiten optischen Achse getrennt ist, die von der zweiten Lichtquelle (12) zu der Bildaufnahmeeinrichtung (32) verläuft, und die erste und zweite optische Achse sich in der Strömungszelle (24) kreuzen.

5. Vorrichtung nach Anspruch 1, 2, 3 oder 4, bei der der Verschluß (34) weggelassen ist und stattdessen der Photodetektor eine Torfunktion hat, wobei das Tor so angeordnet ist, daß es geschlossen ist, während die zweite Lichtquelle (12) Licht aussendet.

6. Vorrichtung nach Anspruch 1, 2, 3, 4 oder 5, bei der die erste Lichtquelle (10) so angeordnet ist, daß sie kontinuierlich Licht aussendet, die zweite Lichtquelle (12) so angeordnet ist, daß sie einen Impuls von weißem Licht aussendet, und die Bildaufnahmeeinrichtung (32) so angeordnet ist, daß sie ein Stehbild des Teilchens (43) aufnimmt.

7. Verfahren zum Analysieren von Teilchenbildern, mit dem man

eine Teilchen enthaltende Probenflüssigkeit durch eine Strömungszelle (24) führt,

einen Teilchenabfühlbereich (42) der Strömungszelle mit Fluoreszenzerregungslicht einer Wellenlänge zur Erzeugung von Fluoreszenz in Zielteilchen bestrahlt,

einen Detektor (38) verwendet, um Fluoreszenz zu ermitteln, und dabei beurteilt, ob ein Zielteilchen (43) ermittelt wurde, und

wenn beurteilt wird, daß ein Zielteilchen (43) ermittelt wurde, einen Bildaufnahmebereich (44) der Strömungszelle (24) mit Abbildungslicht bestrahlt, um ein Bild des Zielteilchens (43) zu erzeugen, welches von einer Bildaufnahmeeinrichtung (32) aufgenommen wird, und den optischen Weg zu dem Detektor (38) verschließt, um zu verhindern, daß der Detektor das Abbildungslicht empfängt.

8. Verfahren nach Anspruch 7, bei dem der Teilchenabfühlbereich (42) in dem Bildaufnahmebereich (44) angeordnet ist und in der Fließrichtung der Teilchen kürzer als der Bildaufnahmebereich (44) ist.

9. Verfahren nach Anspruch 8, bei dem die seitlichen Kanten des Bildabfühlbereiches (42) im wesentlichen mit den seitlichen Kanten des Bildaufnahmebereichs (44) zusammenfallen.

10. Verfahren nach Anspruch 7, 8 oder 9, bei dem der Teilchenabfühlbereich (42) kontinuierlich mit dem Fluoreszenzerregungslicht bestrahlt wird und die Probenflüssigkeit durch die Strömungszelle (24) als ein Hüllenfluß geht.

**Revendications**

1. Appareil pour analyser des images de particule, comprenant :

une cellule d'écoulement (24) pour un écoulement en gaine d'un liquide échantillon contenant des particules ;
une première source de lumière (10) ;
un premier filtre optique (18) pour obtenir, à partir de la lumière émise par la première source de lumière (10), de la lumière d'excitation de fluorescence d'une longueur d'onde spécifique ;
un photodétecteur (38) pour détecter la fluorescence émise à partir d'une particule (43) éclairée par la lumière d'excitation de fluorescence ;
une seconde source de lumière (12) pour émettre une impulsion de lumière pour produire une image de la particule (43) ;
un moyen de saisie d'image (32) pour saisir l'image de la particule (43) produite par la seconde source de lumière (12) ;
un moyen de détermination de détection de particule (40) pour traiter un signal fluorescent provenant du photodétecteur (38) pour déterminer si une particule cible a été détectée, et pour émettre un signal de déclenchement pour activer la seconde source de lumière (12) lorsque l'on détermine qu'une particule cible a été détectée ;
un miroir dichroïque (20), disposé de façon à combiner les trajets optiques de la lumière provenant des première et seconde sources de lumière (10, 12), pour éclairer une région de la cellule d'écoulement (24) ;
un second filtre optique (28) pour arrêter la lumière d'excitation de fluorescence qui a été transmise par la cellule d'écoulement (24) ;
un semi-miroir (30) pour diviser la lumière transmise par le second filtre optique (28) en des première et seconde parties et pour diriger la première partie vers le photodétecteur (38) et la seconde partie vers le moyen de saisie d'image (32) ;
un obturateur (34) disposé entre le semi-miroir (30) et le photodétecteur (38), pour transmettre ou arrêter la lumière, l'obturateur étant conçu pour être fermé lorsque la seconde source de lumière (12) émet de la lumière ; et
une fente (36) disposée entre l'obturateur (34) et le photodétecteur (38) de façon à former une région de détection (42) dans l'écoulement de particules dans une région de saisie d'image (44) du moyen de saisie d'image (32) dans la cellule d'écoulement (24).

2. Appareil pour analyser des images de particule, comprenant :

une cellule d'écoulement (24) pour un écoulement en gaine d'un liquide échantillon contenant des particules ;
une première source de lumière (10) ;
un premier filtre optique (18) pour obtenir, à partir de la lumière émise par la première source de lumière (10), de la lumière d'excitation de fluorescence d'une longueur d'onde spécifique ;
un photodétecteur (38) pour détecter la fluorescence émise à partir d'une particule dans une direction différente de la direction de transmission de la lumière d'excitation de fluorescence à travers la cellule d'écoulement (24) ;
une seconde source de lumière (12) pour émettre une impulsion de lumière pour produire une image de la particule (43) ;
un moyen de saisie d'image (32) pour saisir l'image de la particule (43) produite par la seconde source de lumière (12) ;
un moyen de détermination de détection de particule (40) pour traiter un signal fluorescent provenant du photodétecteur (38) pour déterminer si une particule cible a été détectée, et pour émettre un signal de déclenchement pour activer la seconde source de lumière (12) lorsque l'on détermine qu'une particule cible a été détectée ;

un miroir dichroïque (20), disposé de façon à combiner les trajets optiques de la lumière provenant des première et seconde sources de lumière (10, 12), pour éclairer une région de la cellule d'écoulement (24) ;

un second filtre optique (28) disposé entre la cellule d'écoulement (24) et le moyen de saisie d'image (32) pour arrêter la lumière d'excitation de fluorescence qui a été transmise à travers la cellule d'écoulement (24);

un troisième filtre optique (29) disposé entre la cellule d'écoulement (24) et le photodétecteur (38) pour arrêter la lumière d'excitation de fluorescence ;

un obturateur (34) disposé entre le troisième filtre optique (29) et le photodétecteur (38), pour transmettre ou arrêter la lumière, l'obturateur étant conçu pour être fermé lorsque la seconde source de lumière (12) émet de la lumière ; et

une fente (36) disposée entre l'obturateur (34) et le photodétecteur (38) de façon à former une région de détection (42) dans l'écoulement de particules dans une région de saisie d'image (44) du moyen de saisie d'image (32) dans la cellule d'écoulement (24).

3. Appareil pour analyser des images de particule, comprenant :

une cellule d'écoulement (24) pour un écoulement en gaine d'un liquide échantillon contenant des particules ;

une première source de lumière (10) ;

un filtre optique (18) pour obtenir, à partir de la lumière émise par la première source de lumière (10), de la lumière d'excitation de fluorescence d'une longueur d'onde spécifique ;

un photodétecteur (38) pour détecter la fluorescence émise à partir d'une particule (43) éclairée par la lumière d'excitation de fluorescence ;

une seconde source de lumière (12) pour émettre une impulsion de lumière pour produire une image de la particule (43) ;

un moyen de saisie d'image (32) pour saisir l'image de la particule (43) produite par la seconde source de lumière (12) ;

un moyen de détermination de détection de particule (40) pour traiter un signal fluorescent provenant du photodétecteur (38) pour déterminer si une particule cible a été détectée, et pour émettre un signal de déclenchement pour activer la seconde source de lumière (12) lorsque l'on détermine qu'une particule cible a été détectée ;

un miroir dichroïque (21), disposé de façon à recevoir, de la cellule d'écoulement (24), de la lumière produite par la seconde source de lumière (12) qui a été transmise à travers la cellule d'écoulement et à diriger la lumière d'excitation de fluorescence vers la cellule d'écoulement ;

un semi-miroir (30) pour diviser en des première et seconde parties la lumière reçue de la cellule d'écoulement (24) par l'intermédiaire du miroir dichroïque (21), et pour diriger la première partie vers le photodétecteur (38) et la seconde partie vers le moyen de saisie d'image (32);

un obturateur (34) disposé entre le semi-miroir (30) et le photodétecteur (38), pour transmettre ou arrêter la lumière, l'obturateur étant conçu pour être fermé lorsque la seconde source de lumière (12) émet de la lumière ; et

une fente (36) disposée entre l'obturateur (34) et le photodétecteur (38) de façon à former une région de détection (42) dans l'écoulement de particules dans une région de saisie d'image (44) du moyen de saisie d'image (32) dans la cellule d'écoulement (24).

4. Appareil pour analyser des images de particule, comprenant :

une cellule d'écoulement (24) pour un écoulement en gaine d'un liquide échantillon contenant des particules ;

une première source de lumière (10) ;

un premier filtre optique (18) pour obtenir, à partir de la lumière émise par la première source de lumière (10), de la lumière d'excitation de fluorescence d'une longueur d'onde spécifique ;

un photodétecteur (38) pour détecter la fluorescence émise à partir d'une particule (43) éclairée par la lumière d'excitation de fluorescence ;

une seconde source de lumière (12) pour émettre une impulsion de lumière pour produire une image de la particule (43) ;

un moyen de saisie d'image (32) pour saisir l'image de la particule (43) produite par la seconde source de lumière (12) ;

un moyen de détermination de détection de particule (40) pour traiter un signal fluorescent provenant du photodétecteur (38) pour déterminer si une particule cible a été détectée, et pour émettre un signal de déclenchement pour activer la seconde source de lumière (12) lorsque l'on détermine qu'une particule cible a été détectée ;

un second filtre optique (28) disposé entre la cellule d'écoulement (24) et le photodétecteur (38) pour arrêter la lumière d'excitation de fluorescence ;

un obturateur (34) disposé entre le filtre optique (28) et le photodétecteur (38), pour transmettre ou arrêter la lumière, l'obturateur étant conçu pour être fermé lorsque la seconde source de lumière (12) émet de la lumière ; et

une fente (36) disposée entre l'obturateur (34) et le photodétecteur (38) de façon à former une région de détection (42) dans l'écoulement de particules dans une région de saisie d'image (44) du moyen de saisie d'image (32) dans la cellule d'écoulement (24) ;

dans lequel un premier axe optique allant de la première source de lumière (10) au photodétecteur (38) est distinct d'un second axe optique allant de la seconde source de lumière (12) au moyen de saisie d'image (32), et dans lequel les premier et second axes optiques se coupent l'un l'autre dans la cellule d'écoulement (24).

5. Appareil selon la revendication 1, 2, 3 ou 4, dans lequel on a supprimé l'obturateur (34) et dans lequel, à la place, le photodétecteur a une fonction de porte, la porte étant conçue pour être fermée pendant que la seconde source de lumière (12) émet de la lumière.

6. Appareil selon la revendication 1, 2, 3, 4 ou 5, dans lequel la première source de lumière (10) est conçue pour émettre de la lumière de façon continuelle, dans lequel la seconde source de lumière (12) est conçue pour émettre une impulsion de lumière blanche et dans lequel le moyen de saisie d'image (32) est conçu pour saisir une image fixe de la particule (43).

7. Procédé d'analyse d'images de particule, comprenant :

le passage d'un liquide échantillon contenant des particules dans une cellule d'écoulement (24) ;

l'éclairement d'une région de détection de particules (42) de la cellule d'écoulement avec de la lumière d'excitation de fluorescence, d'une longueur d'onde propre à produire de la fluorescence dans des particules cibles ;

l'utilisation d'un détecteur (38) pour détecter toute fluorescence et pour déterminer ainsi si une particule cible (43) a été détectée ; et,

si l'on détermine qu'une particule cible (43) a été détectée, d'éclairement d'une région de saisie d'image (44) de la cellule d'écoulement (24) avec de la lumière de formation d'image pour produire une image de la particule cible (43), qui est saisie par le moyen de saisie d'image (32), et pour obturer le trajet optique vers le détecteur (38) pour empêcher le détecteur de recevoir la lumière de formation d'image.

8. Procédé selon la revendication 7, dans lequel la région de détection de particules (42) est située dans la région de saisie d'image (44) et est plus courte, dans la direction d'écoulement des particules, que la région de saisie d'image (44).

9. Procédé selon la revendication 8, dans lequel les bords latéraux de la région de détection de particules (42) coïncident sensiblement avec les bords latéraux de la région de saisie d'image (44).

10. Procédé selon la revendication 7, 8, ou 9, dans lequel la région de détection de particules (42) est éclairée continuellement avec la lumière d'excitation de fluorescence, et dans lequel le liquide échantillon passe dans la cellule d'écoulement (24) sous forme d'un écoulement en gaine.

FIG.1

## FIG. 2

## FIG. 3

FIG.4

STROBE LUMINOUS
TRIGGER SIGNAL

EP 0 551 010 B1

FIG.5

FIG.6